# EUROPÄISCHE PATENTSCHRIFT

(11) **EP 4 191 999 B1**
(45) Veröffentlichungstag und Bekanntmachung des Hinweises auf die Patenterteilung: **07.05.2025**
(21) Anmeldenummer: 21212133.9
(22) Anmeldetag: 03.12.2021
(51) Int. Cl.: H04N 23/74, G06V 10/141, G06V 20/58, B60Q 1/00

(54) **VERFAHREN ZUM BETRIEB EINER BETRIEBSEINRICHTUNG EINES KRAFTFAHRZEUGS**
METHOD FOR OPERATING AN OPERATING DEVICE OF A MOTOR VEHICLE
PROCÉDÉ DE FONCTIONNEMENT D'UN DISPOSITIF DE FONCTIONNEMENT D'UN VÉHICULE AUTOMOBILE

(43) Veröffentlichungstag der Anmeldung: 07.06.2023
(73) Patentinhaber: VOLKSWAGEN AG, 38440 Wolfsburg (DE)
(72) Erfinder: Thiessen, Eugen, 49214 Bad Rothenfelde (DE)

(56) Entgegenhaltungen:
- DE-A1- 102009 026 571
- DE-A1- 102017 204 836

## Beschreibung

Die Erfindung betrifft ein Verfahren zum Betrieb einer Betriebseinrichtung eines Kraftfahrzeugs mit den Merkmalen vom Oberbegriff des Patentanspruchs 1.

Ein Verfahren zum Betrieb einer Betriebseinrichtung eines Kraftfahrzeugs ist aus der WO 2021/010201 A1 bekannt geworden. Konkret wird ein Kraftfahrzeug mit einer Beleuchtungseinrichtung und einer im Kraftfahrzeug befindlichen Kamera zur Objekterfassung beschrieben. Zusätzlich zur Beleuchtungseinrichtung weist das Kraftfahrzeug auch eine Strahlungsquelle zur Bestrahlung eines durch die Kamera zu überwachenden Bereiches auf. Ferner ist eine Einstellungseinheit für die Strahlungsquelle vorhanden, welche auf die Einschaltzyklen der Beleuchtungseinrichtung des Kraftfahrzeugs abgestimmt ist. In den Zeitintervallen, in denen die Beleuchtungseinrichtung ausgeschaltet ist, sendet die Zusatz-Lichtquelle kurze Lichtpulse aus. Die Lichtpulse werden in Abhängigkeit der Bilder ausgesendet, die von der Kamera aufgenommen wurden, während die Beleuchtungseinrichtung des Kraftfahrzeugs angeschaltet war. Durch die zusätzlichen Lichtpulse sollen Bilder von aufgenommenen Objekten (z. B. Autobahnschilder, Gegenstände auf der Fahrbahn, weiße Fahrstreifen) besser durch die Kamera erfasst werden können, da die zusätzlichen Lichtimpulse auf die Farbe der Objekte abgestimmt sind. Ferner erfolgt durch eine enge Abstimmung zwischen der Belichtungszeit der Kamera und der Helligkeit der Zusatz-Lichtquelle eine Kompensation von normalerweise ohne Zusatz-Lichtquelle über- oder unterbelichteten Bereichen der durch die Kamera aufgenommenen Bilder.

Die die Merkmale vom Oberbegriff des geltenden Anspruchs 1 aufweisende DE 10 2017 204 836 A1 beschreibt ein Verfahren zum Erfassen von Objekten in der Umgebung eines Fahrzeugs. Das Verfahren weist folgende Schritte auf: Aufnehmen von Bildern einer Umgebung des Fahrzeuges mittels einer an dem Fahrzeug angeordneten Kamera, Auswerten von Bildinformation der aufgenommenen Bilder zur Bestimmung der Position wenigstens eines Objekts relativ zu dem Fahrzeug. Um hierbei die Qualität der Erfassung zu verbessern, werden bei dem Aufnehmen der Bilder mittels einer Ansteuerung von an dem Fahrzeug angeordneten Scheinwerfern nacheinander mehrere verschiedene Beleuchtungssituationen realisiert und damit nacheinander mehrere Bilder unter den verschiedenen Beleuchtungssituationen aufgenommen. Beim Auswerten der Bildinformation wird die für jedes Bild realisierte Beleuchtungssituation berücksichtigt. Schließlich werden die Positionsdaten des Objektes ausgegeben. Es wird auch vorgeschlagen, zwei Kameras einzusetzen und nacheinander mehrere Bilder unter den verschiedenen Beleuchtungssituationen aufzunehmen, um die Anzahl der auswertbaren Bilder zu erhöhen.

Aus der DE 10 2009 026571 A1 ist ein Verfahren zur fahrzeuggestützten Beleuchtung von Verkehrsumgebungen bekannt. Konkret wird Licht mittels mindestens einer Lichtquelle erzeugt, das von einem Fahrzeug in eine Verkehrsumgebung mit einer zur Blendung des menschlichen Auges geeigneten Momentanintensität eingestrahlt wird. Kritische Objekte in der Verkehrsumgebung werden erfasst, wobei beim Erzeugen des Lichts die zeitlich gemittelte Intensität zur Vermeidung der Blendung des menschlichen Auges verringert wird, wenn ein kritisches Objekt erfasst wird. Hierbei wird das Licht unterbrochen in die Verkehrsumgebung gemäß AN- und AUS-Perioden eingestrahlt. In einer AUS-Periode wird von der Lichtquelle kein Licht in die Verkehrsumgebung eingestrahlt, während in einer AN-Periode das Licht im Wesentlichen in dieselbe Verkehrsumgebung eingestrahlt wird.

Der vorliegenden Erfindung liegt nun die Aufgabe zu Grunde, ein alternatives Verfahren zum Betrieb einer Betriebseinrichtung eines Kraftfahrzeugs bereitzustellen, mit dem eine Erfassung von Objekten im Umfeld des Kraftfahrzeugs verbessert werden kann. Vorliegende Aufgabe wird durch ein Verfahren mit den Merkmalen von Patentanspruch 1 gelöst. Vorteilhafte Ausbildungen bzw. Weiterbildungen der Erfindung sind den abhängigen Ansprüchen zu entnehmen.

Die Erfindung geht zunächst von einem Verfahren zum Betrieb einer Betriebseinrichtung eines Kraftfahrzeugs aus, welches mehrere Strahlungsquellen zur Aussendung von elektromagnetischer Strahlung in und/oder entgegen einer Vorwärts-Fahrtrichtung aufweist. Ferner ist wenigstens eine Kamera im oder am Kraftfahrzeug zur Erfassung von Objekten im Umfeld des Kraftfahrzeugs vorhanden. Die zu erfassenden Objekte werden durch die Strahlung der genannten Strahlungsquellen angestrahlt.

Es wird ferner vorgeschlagen, dass die Aufnahme von Bildern durch die Kamera zur Erfassung von Objekten in der Weise mit der Aussendung von elektromagnetischer Strahlung durch die Strahlungsquellen abgestimmt wird, dass zumindest während der Aufnahme eines Bildes durch die wenigstens eine Kamera von den Strahlungsquellen nur noch ein Teil eingeschaltet bleibt.

Mit anderen Worten wird während der Aufnahme eines Bildes durch die Kamera wenigstens eine dieser Strahlungsquellen ausgeschaltet.

Auf diese Weise wird eine Grundvoraussetzung dafür geschaffen, dass ein zu erfassendes Objekt durch die Kamera besser erfasst werden kann. Dabei liegt der Erfindung die Erkenntnis zu Grunde, dass durch das Vorhandensein mehrerer Strahlungsquellen, welche Strahlung in Richtung eines Objektes aussenden, eine klare Schattenbildung und somit auch eine gute Kontrastbildung verschlechtert wird. Eine gute Kontrastbildung ist jedoch für die Erfassung eines Objektes durch eine Kamera sehr wichtig. Mit Reduzierung der Strahlungsquellen bei einer Aufnahme eines Bildes kann somit der Kontrast zwischen entstehenden Schatten und dem zu erkennenden Objekt durch die Reduzierung von Halbschatten spürbar erhöht werden.

Gemäß einer Weiterbildung der Erfindung wird vorgeschlagen, dass während der Aufnahme eines Bildes durch die Kamera von den Strahlungsquellen zumindest eine solche Strahlungsquelle eingeschaltet belassen wird, deren elektromagnetisches Wellenspektrum durch die wenigstens eine Kamera erfassbar ist. Des Weiteren wird wenigstens eine solche Strahlungsquelle ausgeschaltet, deren Wellenspektrum das Gleiche ist, wie das der eingeschaltet belassenen Strahlungsquelle.

Auf diese Weise wird eine Reduzierung von Schattenbildung unabhängig davon ermöglicht, ob die Strahlungsquellen des Kraftfahrzeugs im sichtbaren Wellenspektrum arbeiten (beispielsweise als Lichtquellen von Beleuchtungseinrichtungen) oder auch im nicht sichtbaren Bereich des Wellenspektrums (beispielsweise als Infrarot-Strahlungsquellen).

Des Weiteren sind die Strahlungsquellen Bestandteil eines linken und eines rechten Scheinwerfers des Kraftfahrzeugs. Die Strahlungsquellen senden elektromagnetische Strahlung im sichtbaren Wellenspektrum aus, wobei der linke und der rechte Scheinwerfer jeweils wenigstens eine solche Strahlungsquelle aufweisen. Ferner werden die Strahlungsquellen derart zeitversetzt zueinander angesteuert, dass dann, wenn die Strahlungsquelle des linken Scheinwerfers eingeschaltet wird, die Strahlungsquelle des rechten Scheinwerfers ausgeschaltet wird und umgekehrt. Erfindungsgemäß sind wenigstens zwei Kameras vorhanden, die mit den Einschaltzeiten der Scheinwerfer derart synchronisiert sind, dass eine der Kameras dann eingeschaltet wird, wenn die Strahlungsquelle des linken Scheinwerfers eingeschaltet wird und dann ausgeschaltet wird, wenn die Strahlungsquelle des rechten Scheinwerfers eingeschaltet und die andere der Kameras eingeschaltet wird und umgekehrt.

Durch derartige Merkmale des Verfahrens kann mit der vorhandenen Frontbeleuchtung des Kraftfahrzeugs auf einfache Weise die Schattenbildung bei einem zu erkennenden Objekt reduziert und damit dessen Erkennbarkeit verbessert werden.

Insbesondere ist es dabei sehr zweckmäßig, wenn in Vorwärts-Fahrtrichtung gesehen eine Kamera rechts und eine andere Kamera links angeordnet ist. Dabei wird die rechts angeordnete Kamera dann eingeschaltet, wenn die Strahlungsquelle des linken Scheinwerfers eingeschaltet und die Strahlungsquelle des rechten Scheinwerfers ausgeschaltet wird. Die links angeordnete Kamera hingegen wird dann eingeschaltet, wenn die Strahlungsquelle des rechten Scheinwerfers eingeschaltet und die Strahlungsquelle des linken Scheinwerfers ausgeschaltet wird.

Durch diese Ausbildung kann die Sicht der jeweiligen Kamera auf das zu erfassende Objekt und den durch das Objekt geworfenen Schatten für eine Bilderkennung optimiert werden.

Anzumerken ist in diesem Zusammenhang, dass es durchaus ausreichend und auch vorteilhaft ist, wenn nur eine Kamera vorhanden ist, die die mit den Einschaltzeiten der Scheinwerfer derart synchronisiert ist, dass diese immer dann ein Bild aufnimmt, wenn nur gerade einer der Scheinwerfer eingeschaltet ist. Wichtig ist dabei, dass die Kamera ein zu erfassendes Objekt möglichst aus einem anderen Blickwinkel aufnimmt, als die Scheinwerfer bzw. deren Lichtquellen dies beleuchten. Das Vorhandensein von zwei Kameras ist jedoch vorteilhafter, denn je größer der Winkelunterschied zwischen Beleuchtungs- und Aufnahmerichtung, desto größer ist auch der entstehende Schatten.

Eine andere Weiterbildung des erfindungsgemäßen Verfahrens schlägt vor, dass die Strahlungsquellen Bestandteil von Scheinwerfern und/oder Heckleuchten des Kraftfahrzeugs sind und über eine sogenannte Pulsweitenmodulation (PWM) angesteuert werden. Die Aufnahme von Bildern durch die wenigstens eine Kamera erfolgt nur dann, wenn in einem Zyklus der Pulsweitenmodulation gerade ein Einschaltsignal für eine Strahlungsquelle vorliegt.

Diese Verfahrensausbildung setzt jedoch voraus, dass die PWM-Zyklen der Außenbeleuchtung des Kraftfahrzeugs miteinander in bestimmter Weise synchronisiert sind. Konkret ist denkbar, dass die Synchronisation derart erfolgt, dass die Zykluslängen der Pulsweitenmodulation für alle Strahlungsquellen gleichlang sind. Zusätzlich ist es erforderlich, dass die Einschaltsignale des einen Scheinwerfers zeitversetzt zu den Einschaltsignalen des anderen Scheinwerfers ausgelegt sind. Wenn sich die Einschaltsignale beider Scheinwerfer nicht zeitlich überschneiden, befindet sich also immer dann, wenn sich beispielsweise der linke Scheinwerfer gerade im Einschaltzustand befindet, der rechte Scheinwerfer gerade im Ausschaltzustand und umgekehrt. Bei einer Überschneidung der Einschaltsignale muss jedoch sichergestellt sein, dass während eines jeden (synchronisierten) PWM-Zyklus zumindest einmal ein solcher Zeitpunkt auftritt, in dem entweder nur der eine Scheinwerfer oder nur der andere Scheinwerfer eingeschaltet ist.

Eine Kamera, welche ebenfalls mit dem PWM-Zyklus der Scheinwerfer synchronisiert ist, erhält immer genau dann ein Aufnahmesignal, wenn ein Einschaltsignal nur für einen der Scheinwerfer vorliegt. Dadurch wird immer nur dann ein Bild aufgenommen, wenn nur eine Strahlungsquelle beziehungsweise nur einer der Scheinwerfer eingeschaltet ist.

Analog kann für die Heckleuchten des Kraftfahrzeugs vorgegangen werden.

Das erfindungsgemäße Verfahren kann auch dadurch weitergebildet sein, dass alternativ oder zusätzlich die Strahlungsquellen und die wenigstens eine Kamera im Infrarot-Wellenspektrum der elektromagnetischen Strahlung betrieben werden.

Hierdurch kann das Verfahren auf einen häufig genutzten Frequenzbereich für die Objekterkennung ausgedehnt werden.

Es ist für eine verbesserte Objekterkennung zudem von Vorteil, wenn ein Objekterkennungsalgorithmus vorhanden ist, welcher auswertet, welche Strahlungsquelle zum Zeitpunkt einer Aufnahme durch eine Kamera eingeschaltet war und welche Relativposition die Strahlungsquelle zur Kamera aufweist. So kann der Objekterkennungsalgorithmus beispielsweise erkennen, dass bei einer Bestrahlung eines Objektes von einer rechtsseitig am Kraftfahrzeug vorhandenen Strahlungsquelle und einer Aufnahme durch eine linksseitig am Kraftfahrzeug angeordnete Kamera, die Schattenbildung linksseitig vom Objekt auftreten muss.

Hierdurch kann eine Auswertung und Plausibilitätskontrolle des aufgenommenen Bildes erleichtert werden.

Eine noch andere Weiterbildung der Erfindung schlägt vor, dass die Strahlungsquellen Bestandteil von Scheinwerfern sind und eine Aufnahme durch die wenigstens eine Kamera für diejenigen Fälle abwechselnd dann erfolgt, dass nur wenigstens eine Strahlungsquelle des linken Scheinwerfers, nur wenigstens eine Strahlungsquelle des rechten Scheinwerfers und Strahlungswellen beider Scheinwerfer eingeschaltet sind.

Hierdurch kann die Menge an unterschiedlichen Informationen durch die aufgenommenen Bilder für einen Objekterkennungsalgorithmus optimiert werden. Die Chancen, dass dadurch ein Objekt richtig erfasst wird, steigen somit weiter an.

Zusätzlich oder alternativ ist es gemäß einer anderen Ausbildung der Erfindung auch denkbar, dass die Strahlungsquellen Bestandteil von Heckleuchten sind und eine Aufnahme durch die (dann heckseitig angeordnete) wenigstens eine Kamera für diejenigen Fälle abwechselnd dann erfolgt, dass nur wenigstens eine Strahlungsquelle der linken Heckleuchte, nur wenigstens eine Strahlungsquelle der rechten Heckleuchte und Strahlungsquellen beider Heckleuchten eingeschaltet sind.

Analog zur zuvor beschriebenen Weiterbildung kann auch hier die Informationsrate bei einer heckseitigen Objekterkennung für einen Objekterkennungsalgorithmus verbessert werden.

Bevorzugte Ausführungsbeispiele der Erfindung sind in den Figuren dargestellt und werden anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können. Wird der Begriff "und/oder" in einer Aufzählung aus zwei oder mehr Begriffen bzw. Gegenständen verwendet, so kann dies bedeuten, dass ein beliebiger der aufgezählten Begriffe bzw. Gegenstände allein verwendet werden kann. Es kann auch bedeuten, dass eine beliebige Kombination aus zwei oder mehr der aufgezählten Begriffe bzw. Gegenstände verwendet werden kann.

Es zeigen, jeweils schematisch
- Fig. 1: ein zur Durchführung des Verfahrens hergerichtetes Kraftfahrzeug von oben,
- Fig. 2: ein Signalflussplan zur Erläuterung der am Verfahren beteiligten Komponenten,
- Fig. 3: ein Signaldiagramm zur Erläuterung einer Ausprägung des Verfahrens,
- Fig. 4: die Darstellung eines Betriebszustandes eines nach dem erfindungsgemäßen Verfahren arbeitenden Kraftfahrzeugs und
- Fig. 5: die Darstellung eines nach einem herkömmlichen Verfahren arbeitenden Kraftfahrzeug.

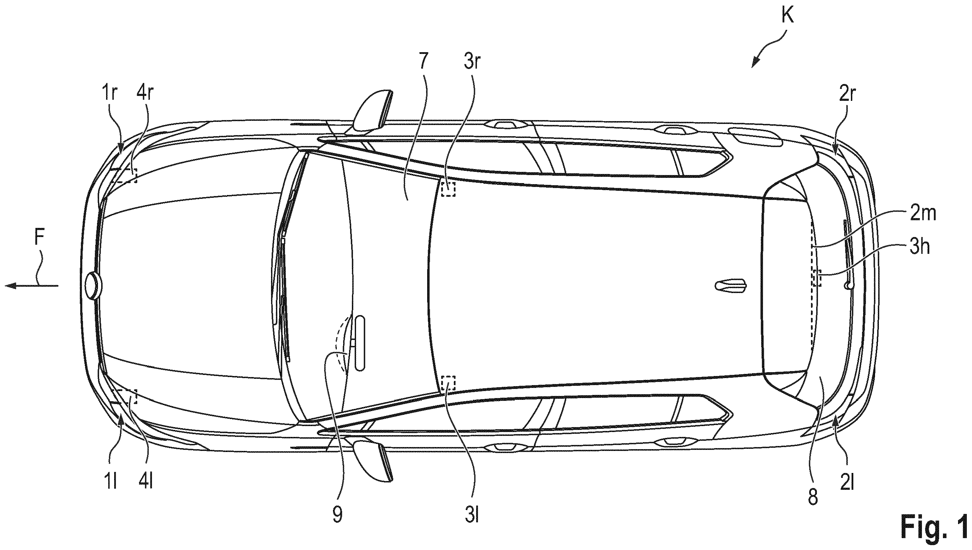

In der Fig. 1 ist ein Kraftfahrzeug K von oben ersichtlich, welches zur Ausführung des erfindungsgemäßen Verfahrens hergerichtet ist. Das Kraftfahrzeug K weist einen rechten Scheinwerfer 1r und einen linken Scheinwerfer 1l auf. Ferner sind eine rechte Heckleuchte 2r und eine linke Heckleuchte 2l ersichtlich.

Die Scheinwerfer 1l, 1r strahlen elektromagnetische Strahlung (Licht) in eine Vorwärts-Fahrtrichtung F aus und leuchten damit die vor dem Kraftfahrzeug K befindliche Umgebung aus. Die Heckleuchten 2l, 2r hingegen strahlen Licht entgegen der Vorwärts-Fahrtrichtung F aus und beleuchten somit zumindest zu einem gewissen Maß die hinter dem Kraftfahrzeug K befindliche Umgebung.

Des Weiteren ist eine Heckleuchte 2m in der Mitte im oberen Bereich einer Heckscheibe 8 angeordnet. Die Heckleuchte 2m wird auch als "dritte Bremsleuchte" bezeichnet.

Zur Erfassung von Objekten in der Umgebung vor dem Kraftfahrzeug K sind im Innenraum des Kraftfahrzeugs K, und zwar im oberen Bereich an einer Frontscheibe 7, eine rechts angeordnete Kamera 3r und eine links angeordnete Kamera 3l vorhanden.

Die Kameras 3r, 3l sind vorzugsweise als CCD-Kameras ausgebildet. Die Kameras 3r, 3l können alternativ oder zusätzlich auch als Infrarot-Kameras ausgebildet sein.

Zur Unterstützung einer Infrarot-Bilderkennung weist das Kraftfahrzeug K im Bereich seines Frontendes eine rechte Infrarot-Strahlungsquelle 4r und eine linke Infrarot-Strahlungsquelle 4l auf. Die Infrarot-Strahlungsquellen 4r, 4l leuchten die Umgebung vor dem Kraftfahrzeug K mit Infrarotstrahlung aus und erleichtern somit eine Aufnahme von Bildern der Umgebung durch Infrarotkameras selbst bei sehr schlechten Lichtverhältnissen.

Zur Erfassung der Umgebung hinter dem Kraftfahrzeug K ist entsprechend eine heckseitige Kamera 3h vorhanden, welche ebenfalls im oberen Bereich der Heckscheibe 8 angeordnet ist. Die heckseitige Kamera 3h ist ebenfalls vorzugsweise als CCD-Kamera ausgebildet, kann aber auch analog zu den Kameras 3l, 3r zusätzlich oder alternativ als Infrarotkamera ausgebildet sein.

Aufgenommene Bilder der Kameras 3r, 3l und/oder der Kamera 3h können auf einer Anzeigefläche eines Kombiinstrumentes 9 dargestellt werden. Alternativ oder zusätzlich ist auch die Darstellung der Bilder auf einer anderen Anzeigeeinrichtung, beispielsweise auf einem im Bereich einer Mittelkonsole angeordneten Touchscreen denkbar (nicht dargestellt).

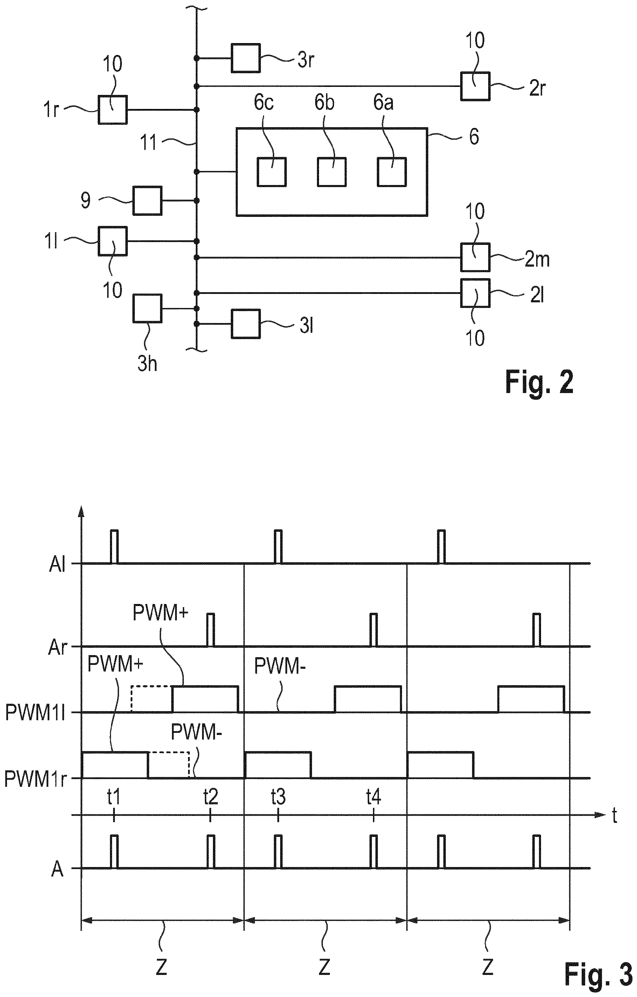

In Fig. 2 ist nun ein Signalflussplan von Komponenten des Kraftfahrzeugs K ersichtlich, welche am erfindungsgemäßen Verfahren beteiligt sind.

So ist eine Steuereinrichtung 6 erkennbar, welche eine Speichereinheit 6a, eine Auswerte- und Logikeinheit 6b sowie eine Ansteuereinheit 6c aufweist. Ferner sind die Scheinwerfer 1r, 1l sowie die Heckleuchten 2r, 2l dargestellt. Die Scheinwerfer 1l, 1r und die Heckleuchten 2r, 2l weisen Strahlungsquellen 10 auf, welche als Leuchtmittel ausgebildet sind. Die Strahlungsquellen 10 können beispielsweise Leuchtdioden sein. Des Weiteren sind die Kameras 3r, 3l sowie 3h erkennbar. Alle genannten Komponenten einschließlich des Kombiinstrumentes 9 sind signaltechnisch mit einem Datenbus 11 verbunden, welcher beispielsweise als CAN-Bus ausgebildet sein kann.

Durch die Kameras 3l, 3r und/oder 3h erzeugte Signale werden an die Steuereinrichtung 6 weitergeleitet. Dort werden die Signale in der Auswerte- und Logikeinheit 6b, welche auch eine Bildbearbeitungseinheit umfasst, zu Bildern verarbeitet und die Bilddaten über die Ansteuereinheit 6c einer Anzeigeeinheit des Kombiinstrumentes 9 zugeführt.

In der Speichereinheit 6a ist unter anderem ein Objekterkennungsalgorithmus abgelegt, auf den die Auswerte- und Logikeinheit 6b bei ihrer Auswertung und Verarbeitung zugreift.

Im vorliegenden Ausführungsbeispiel werden die Scheinwerfer 1l, 1r und auch die Heckleuchten 2l, 2r und 2m mittels des bekannten PWM-Verfahrens (PWM = Pulsweitenmodulation) angesteuert. Hierbei kann die Helligkeit des von den Strahlungsquellen 10 abgegebenen Lichts über die Pulsweite und Pulsfrequenz der Signalansteuerung verändert werden.

Das PWM-Verfahren ist hinlänglich bekannt und braucht deshalb hier nicht weiter erläutert zu werden.

In Fig. 3 ist beispielhaft eine mögliche Ausbildung des erfindungsgemäßen Verfahrens anhand eines Signaldiagramms ersichtlich. So sind über der Zeit t ein Aufnahmesignal Al für die linke Kamera 3l, ein Aufnahmesignal Ar für die rechte Kamera 3r sowie ganz unten ein Aufnahmesignal A für die heckseitige Kamera 3h aufgetragen.

Des Weiteren sin dazwischen ein PWM-Signal PWM1l für den linken Scheinwerfer 1l und ein PWM-Signal PWM1r für den rechten Scheinwerfer 1r ersichtlich.

Schließlich sind noch PWM-Zyklen Z beziffert. Aus den PWM-Zyklen Z wird deutlich, dass diese für die beiden Scheinwerfer 1l, 1r synchronisiert sind. Mit anderen Worten weisen die PWM-Zyklen Z sowohl für den linken Scheinwerfer 1l als auch für den rechten Scheinwerfer 1r die gleiche Länge auf. Nur der Vollständigkeit halber ist zu erwähnen, dass auch die PWM-Zyklen der Heckleuchten 2l, 2r und 2m miteinander synchronisiert sind (nicht dargestellt).

Wesentlich ist nun, dass die Ansteuerung der Scheinwerfer 1l, 1r mit der Ansteuerung der Kameras 3l und 3r genau aufeinander abgestimmt ist.

Wie anhand der Figur zu erkennen ist, erfolgt die PWM-Ansteuerung der Scheinwerfer 1l, 1r zunächst so, dass es in jedem PWM-Zyklus Z zumindest einen Zeitpunkt gibt, in dem nur am rechten Scheinwerfer 1r ein Einschaltsignal PWM+ oder nur am linken Scheinwerfer 1l ein Einschaltsignal PWM+ anliegt. Liegt ein Ausschaltsignal PWM- an, geben die Scheinwerfer 1l, 1r kein Licht ab.

Dies ließe sich auch dann realisieren, wenn sich die Einschaltsignale PWM+ beider Scheinwerfer 1l, 1r zeitweise überschneiden würden (gestrichelt angedeutet).

Die Ansteuerung der Kameras 3l und 3r ist nun derart auf die PWM-Ansteuerung der Scheinwerfer 1l, 1r abgestimmt, dass immer dann, wenn gerade nur an einem der Scheinwerfer 1l, 1r ein Einschaltsignal PWM+ anliegt (also nur einer der Scheinwerfer 1l, 1r Licht aussendet), von der Ansteuereinheit 6c der Steuereinrichtung 6 (vergleiche Fig. 2) auch ein Aufnahmesignal Al für die linke Kamera 3l oder ein Aufnahmesignal Ar für die rechte Kamera 3r erzeugt wird (vergleiche beispielsweise Zeitpunkte t1 und t2).

Bei einer Aufnahme eines Objektes durch eine der Kameras 3l, 3r wird also von den Scheinwerfern 1l, 1r immer nur noch ein Teil, das heißt nur ein Scheinwerfer eingeschaltet.

Insbesondere erfolgt die Ansteuerung im vorliegenden Ausführungsbeispiel in der Weise, dass dann, wenn am rechten Scheinwerfer 1r ein Einschaltsignal PWM+ vorliegt, für die linke Kamera 3l ein Aufnahmesignal Al erzeugt wird. Liegt hingegen am linken Scheinwerfer 1l ein Einschaltsignal PWM+ an, so wird an die rechte Kamera 3r ein Aufnahmesignal Ar angelegt und diese nimmt dann ein Bild auf.

Da im Moment eines Aufnahmesignals Al beziehungsweise Ar die Menge der Strahlungsquellen, hier der Scheinwerfer 1l, 1r reduziert ist, kann die Schattenausbildung der durch die Scheinwerfer 1l, 1r beleuchteten und zu erfassenden Objekte intensiviert und dadurch ein Kontrast zwischen Schatten und dem zu erfassenden Objekt vergrößert werden.

In analoger Weise ist es denkbar, dass die Einschaltsignale PWM+ Einschaltsignale der Heckleuchten 2l, 2r darstellen. Da im Ausführungsbeispiel nur eine einzige heckseitige Kamera 3h vorhanden ist, erhöht sich dementsprechend die Anzahl der Aufnahmesignale A, mit denen die heckseitige Kamera 3h angesteuert wird. Aber auch hier wird immer nur dann ein Aufnahmesignal A erzeugt, wenn nur eine der Heckleuchten (2l oder 2r) angeschaltet ist (vgl. beispielsweise Zeitpunkte t3 und t4).

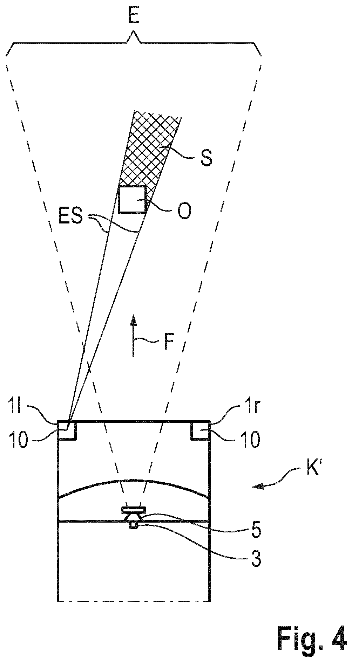

Der daraus resultierende Effekt soll schematisch anhand der Fig. 4 näher erläutert werden. So ist in dieser Figur nur eine Kamera 3 vorhanden. Diese weist einen Erfassungsbereich E auf und dient zur Erfassung eines Objektes O, welches in einer Vorwärts-Fahrtrichtung F vor dem Kraftfahrzeug K' auftaucht.

Das Kraftfahrzeug K' weist einen linken Scheinwerfer 1l und einen rechten Scheinwerfer 1r auf, welche jeweils mit wenigstens einem Strahlungsmittel 10 ausgestattet sind. Die Strahlungsmittel 10 sind vorzugsweise als Leuchtdioden ausgebildet und senden elektromagnetische Strahlung ES im sichtbaren Bereich aus.

Das Kraftfahrzeug K' arbeitet ebenfalls nach dem erfindungsgemäßen Verfahren. Daher nimmt die Kamera 3 nur dann ein Bild auf, wenn einzig und allein am linken Scheinwerfer 1l (im Bild dargestellt) oder am rechten Scheinwerfer 1r (im Bild nicht dargestellt) ein Einschaltsignal PWM+ anliegt und dieser somit Licht abstrahlt.

Auf diese Weise wird im Moment der Aufnahme durch die Kamera 3 immer nur ein einziger Schatten S erzeugt. Dieser ist sehr dunkel und hebt sich somit im Kontrast sehr deutlich vom zu erfassenden Objekt O ab. Dies führt zu einer deutlichen Verbesserung der Objekterkennung durch das Kraftfahrzeug K'.

Ein ähnlicher, vorteilhafter Effekt in der Schattenbildung würde auch dann erzielt, wenn die Strahlungsquellen 10 durch Strahlungsquellen im Infrarotbereich und die Kamera 3 durch eine Infrarotkamera ersetzt oder ergänzt wurde.

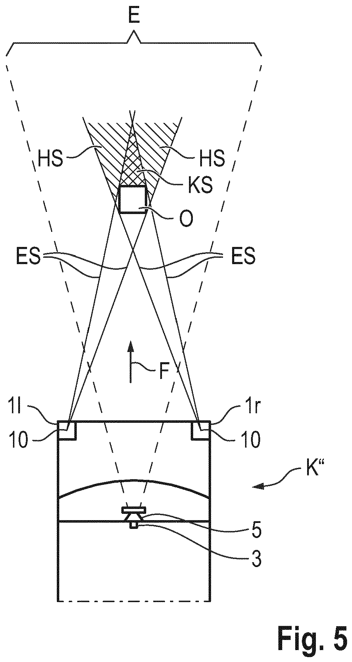

Im Gegensatz dazu werden bei einer herkömmlichen Verfahrensweise in einem Kraftfahrzeug K" (vgl. Fig. 5), bei dem eine Aufnahme durch die Kamera 3 dann erfolgt, wenn beide Scheinwerfer 1l, 1r eingeschaltet sind, auf Grund der elektromagnetischen Strahlung ES beider Scheinwerfer 1l, 1r ein hinter dem Objekt O liegender Kernschatten KS sowie seitlich des Objektes O befindliche Halbschatten HS erzeugt. Die Halbschatten HS weisen jedoch in Bezug auf das Objekt einen verringerten Kontrast auf, so dass dadurch die Erkennung des Objektes O erschwert ist.

### Bezugszeichenliste

- 1l, 1r: Scheinwerfer links, rechts
- 2l, 2r: Heckleuchte links, rechts
- 2m: Heckleuchte Mitte, dritte Bremsleuchte
- 3: Kamera
- 3h: Kamera heckseitig
- 3l, 3r: Kamera links, rechts
- 4l, 4r: Infrarot-Strahlungsquelle links, rechts
- 5: Spiegelfuß
- 6: Steuereinrichtung
- 6a: Speichereinheit
- 6b: Auswerte- und Logikeinheit
- 6c: Ansteuereinheit
- 7: Frontscheibe
- 8: Heckscheibe
- 9: Kombiinstrument
- 10: Strahlungsquellen, Leuchtmittel
- 11: Datenbus
- A: Aufnahmesignal für heckseitige Kamera
- Al: Aufnahmesignal für die linke Kamera
- Ar: Aufnahmesignal für die rechte Kamera
- E: Erfassungsbereich
- ES: elektromagnetische Strahlung
- F: Vorwärts-Fahrtrichtung
- HS: Halbschatten
- KS: Kernschatten
- K, K', K": Kraftfahrzeug
- O: Objekt
- PWM11: PWM-Signal für den linken Scheinwerfer
- PWM1r: PWM-Signal für den rechten Scheinwerfer
- PWM+: Einschaltsignal
- PWM-: Ausschaltsignal
- S: Schatten
- t: Zeit
- t1-t4: Zeitpunkte
- Z: PWM-Zyklen

## Patentansprüche

1. Verfahren zum Betrieb einer Betriebseinrichtung eines Kraftfahrzeugs (K, K'), mit mehreren Strahlungsquellen (4l, 4r; 10) zur Aussendung von elektromagnetischer Strahlung (ES) in und/oder entgegen einer Vorwärts-Fahrtrichtung (F) sowie mit wenigstens einer Kamera (3; 3l, 3r, 3h) zur Erfassung von Objekten (O) im Umfeld des Kraftfahrzeugs (K, K'), welche durch die Strahlung (ES) der Strahlungsquellen (4l, 4r; 10) angestrahlt werden, wobei die Aufnahme von Bildern durch die Kamera (3; 3l, 3r, 3h) zur Erfassung von Objekten (O) in der Weise mit der Aussendung von elektromagnetischer Strahlung (ES) durch die Strahlungsquellen (4l, 4r; 10) abgestimmt wird, dass zumindest während der Aufnahme eines Bildes durch die wenigstens eine Kamera (3; 3l, 3r, 3h) von den Strahlungsquellen (4l, 4r; 10) nur noch ein Teil eingeschaltet bleibt, wobei die Strahlungsquellen (10) Bestandteil eines linken und eines rechten Scheinwerfers (1l, 1r) des Kraftfahrzeugs (K, K') sind und elektromagnetische Strahlung (ES) im sichtbaren Wellenspektrum aussenden, wobei der linke und der rechte Scheinwerfer (1l, 1r) jeweils wenigstens eine solche Strahlungsquelle (10) aufweisen und wobei die Strahlungsquellen (10) derart zeitversetzt zueinander angesteuert werden, dass dann, wenn die Strahlungsquelle (10) des linken Scheinwerfers (1l) eingeschaltet wird, die Strahlungsquelle (10) des rechten Scheinwerfers (1r) ausgeschaltet wird und umgekehrt, **dadurch gekennzeichnet, dass** wenigstens zwei Kameras (3l, 3r) vorhanden sind, die mit den Einschaltzeiten der Scheinwerfer (1l, 1r) derart synchronisiert sind, dass eine (3r) der Kameras (3l, 3r) dann eingeschaltet wird, wenn die Strahlungsquelle (10) des linken Scheinwerfers (1l) eingeschaltet wird und dann ausgeschaltet wird, wenn die Strahlungsquelle (10) des rechten Scheinwerfers (1r) eingeschaltet und die andere (3l) der Kameras (3l, 3r) eingeschaltet wird und umgekehrt.

2. Verfahren nach Anspruch 1, **dadurch gekennzeichnet, dass** während der Aufnahme eines Bildes durch die Kamera (3; 3l, 3r, 3h) von den Strahlungsquellen (4l, 4r; 10) zumindest eine solche Strahlungsquelle (4l, 4r; 10) eingeschaltet belassen wird, deren elektromagnetisches Wellenspektrum durch die wenigstens eine Kamera (3; 3l, 3r, 3h) erfassbar ist und wenigstens eine solche Strahlungsquelle (4l, 4r; 10) ausgeschaltet wird, deren Wellenspektrum das gleiche ist, wie das der eingeschaltet belassenen Strahlungsquelle (4l, 4r; 10).

3. Verfahren nach Anspruch 1 oder 2, **dadurch gekennzeichnet, dass** in Vorwärts-Fahrtrichtung (F) gesehen eine Kamera (3r) rechts und eine andere Kamera (3l) links angeordnet ist, wobei die rechts angeordnete Kamera (3r) dann eingeschaltet wird, wenn die Strahlungsquelle (10) des linken Scheinwerfers (1l) eingeschaltet und die Strahlungsquelle (10) des rechten Scheinwerfers (1r) ausgeschaltet wird, und wobei die links angeordnete Kamera (3l) dann eingeschaltet wird, wenn die Strahlungsquelle (10) des rechten Scheinwerfers (1r) eingeschaltet und die Strahlungsquelle (10) des linken Scheinwerfers (1l) ausgeschaltet wird.

4. Verfahren nach einem der vorhergehenden Ansprüche, **dadurch gekennzeichnet, dass** die Strahlungsquellen (10) Bestandteil von Scheinwerfern (1l, 1r) und/oder Heckleuchten (2l, 2r) des Kraftfahrzeugs (K) sind und über eine Pulsweitenmodulation (PWM1l, PWM1r) angesteuert werden, wobei die Aufnahme von Bildern durch die wenigstens eine Kamera (3l, 3r) nur dann erfolgt, wenn in einem Zyklus (Z) der Pulsweitenmodulation (PWM1l, PWM1r) gerade ein Einschaltsignal (PWM+) für eine Strahlungsquelle (4r, 4l; 10) vorliegt.

5. Verfahren nach einem der vorhergehenden Ansprüche, **dadurch gekennzeichnet, dass** die Strahlungsquellen (4r, 4l) und die wenigstens eine Kamera (3l, 3r) im Infrarot-Wellenspektrum der elektromagnetischen Strahlung (ES) betrieben werden.

6. Verfahren nach einem der vorhergehenden Ansprüche, **dadurch gekennzeichnet, dass** ein Objekterkennungsalgorithmus vorhanden ist, welcher auswertet, welche Strahlungsquelle (4l, 4r; 10) zum Zeitpunkt einer Aufnahme durch eine Kamera (3l, 3r; 3h, 3) eingeschaltet war und welche Relativposition die Strahlungsquelle (4l, 4r; 10) zur Kamera (3l, 3r, 3h, 3) aufweist.

7. Verfahren nach einem der vorhergehenden Ansprüche, **dadurch gekennzeichnet, dass** die Strahlungsquellen (10) Bestandteil von Scheinwerfern (1l, 1r) sind und eine Aufnahme durch die wenigstens eine Kamera (3l, 3r) für diejenigen Fälle abwechselnd dann erfolgt, dass nur wenigstens eine Strahlungsquelle (10) des linken Scheinwerfers (1l), nur wenigstens eine Strahlungsquelle (10) des rechten Scheinwerfers (1r) und Strahlungsquellen (10) beider Scheinwerfer (1l, 1r) eingeschaltet sind.

8. Verfahren nach einem der vorhergehenden Ansprüche, **dadurch gekennzeichnet, dass** die Strahlungsquellen (10) Bestandteil von Heckleuchten (2l, 2r) sind und eine Aufnahme durch die wenigstens eine Kamera (3h) für diejenigen Fälle abwechselnd dann erfolgt, dass nur wenigstens eine Strahlungsquelle (10) der linken Heckleuchte (2l), nur wenigstens eine Strahlungsquelle (10) der rechten Heckleuchte (2r) und Strahlungsquellen (10) beider Heckleuchten (2l, 2r) eingeschaltet sind.

## Claims

1. Method for operating an operating device of a motor vehicle (K, K'), comprising a plurality of radiation sources (4l, 4r; 10) for emitting electromagnetic radiation (ES) in and/or against a forward direction of travel (F) and comprising at least one camera (3; 3l, 3r, 3h) for detecting objects (O) in the surroundings of the motor vehicle (K, K') which are illuminated by the radiation (ES) from the radiation sources (4l, 4r; 10), the recording of images by the camera (3; 3l, 3r, 3h) for detecting objects (O) being coordinated with the emission of electromagnetic radiation (ES) by the radiation sources (4l, 4r; 10) in such a way that at least during the recording of an image by the at least one camera (3; 3l, 3r, 3h) only some of the radiation sources (4l, 4r; 10) remain switched on, the radiation sources (10) being part of a left and a right headlight (1l, 1r) of the motor vehicle (K, K') and emitting electromagnetic radiation (ES) in the visible wave spectrum, the left and the right headlight (1l, 1r) each having at least one such radiation source (10) and the radiation sources (10) being controlled with a time offset from one another such that when the radiation source (10) of the left headlight (1l) is switched on, the radiation source (10) of the right headlight (1r) is switched off and vice versa, **characterized in that** at least two cameras (3l, 3r) are present which are synchronized with the switch-on times of the headlights (1l, 1r) such that one (3r) of the cameras (3l, 3r) is switched on when the radiation source (10) of the left headlight (1l) is switched on and is then switched off when the radiation source (10) of the right headlight (1r) is switched on and the other (3l) of the cameras (3l, 3r) is switched on and vice versa.

2. Method according to claim 1, **characterized in that** during the recording of an image by the camera (3; 3l, 3r, 3h) at least one radiation source (4l, 4r; 10) of the radiation sources (4l, 4r; 10) of which the electromagnetic wave spectrum can be detected by the at least one camera (3; 3l, 3r, 3h) is left switched on, and at least one radiation source (4l, 4r; 10) of which the wave spectrum is the same as that of the radiation source (4l, 4r; 10) left switched on is switched off.

3. Method according to claim 1 or 2, **characterized in that** viewed in the forward direction of travel (F), one camera (3r) is arranged on the right and another camera (3l) is arranged on the left, the camera (3r) arranged on the right being switched on when the radiation source (10) of the left headlight (1l) is switched on and the radiation source (10) of the right headlight (1r) is switched off, and the camera (3l) arranged on the left being switched on when the radiation source (10) of the right headlight (1r) is switched on and the radiation source (10) of the left headlight (1l) is switched off.

4. Method according to any of the preceding claims, **characterized in that** the radiation sources (10) are part of headlights (1l, 1r) and/or tail lights (2l, 2r) of the motor vehicle (K) and are controlled via a pulse width modulation (PWM1l, PWM1r), the recording of images by the at least one camera (3l, 3r) only taking place when a switch-on signal (PWM+) for a radiation source (4r, 4l; 10) is present in a cycle (Z) of the pulse width modulation (PWM11, PWM1r).

5. Method according to any of the preceding claims, **characterized in that** the radiation sources (4r, 4l) and the at least one camera (3l, 3r) are operated in the infrared wave spectrum of the electromagnetic radiation (ES).

6. Method according to any of the preceding claims, **characterized in that** an object recognition algorithm is present which evaluates which radiation source (4l, 4r; 10) was switched on at the time of a recording by a camera (3l, 3r; 3h, 3) and which relative position the radiation source (4l, 4r; 10) has to the camera (3l, 3r, 3h, 3).

7. Method according to any of the preceding claims, **characterized in that** the radiation sources (10) are part of headlights (1l, 1r) and a recording by the at least one camera (3l, 3r) takes place alternately for cases in which only at least one radiation source (10) of the left headlight (1l), only at least one radiation source (10) of the right headlight (1r) and radiation sources (10) of both headlights (1l, 1r) are switched on.

8. Method according to any of the preceding claims, **characterized in that** the radiation sources (10) are part of tail lights (2l, 2r) and a recording by the at least one camera (3h) takes place alternately for cases in which only at least one radiation source (10) of the left tail light (2l), only at least one radiation source (10) of the right tail light (2r) and radiation sources (10) of both tail lights (2l, 2r) are switched on.

## Revendications

1. Procédé permettant de faire fonctionner un dispositif de fonctionnement d'un véhicule automobile (K, K'), comportant plusieurs sources de rayonnement (4l, 4r ; 10) pour l'émission d'un rayonnement électromagnétique (ES) dans un sens de marche avant (F) et/ou dans le sens inverse et comportant au moins une caméra (3 ; 3l, 3r, 3h) pour la détection d'objets (O) dans l'environnement du véhicule automobile (K, K'), lesquels sont éclairés par le rayonnement (ES) des sources de rayonnement (4l, 4r ; 10), dans lequel la capture d'images par la caméra (3 ; 3l, 3r, 3h) pour la détection d'objets (O) est coordonnée avec l'émission de rayonnement électromagnétique (ES) par les sources de rayonnement (4l, 4r ; 10) de telle sorte que, au moins pendant la capture d'une image par l'au moins une caméra (3 ; 3l, 3r, 3h), seule une partie des sources de rayonnement (4l, 4r ; 10) restent allumées, dans lequel les sources de rayonnement (10) font partie d'un phare gauche et d'un phare droit (1l, 1r) du véhicule automobile (K, K') et émettent un rayonnement électromagnétique (ES) dans le spectre des ondes visibles, dans lequel les phares gauche et droit (1l, 1r) présentent respectivement au moins une telle source de rayonnement (10) et dans lequel les sources de rayonnement (10) sont commandées avec un décalage dans le temps l'une par rapport à l'autre de telle sorte que, lorsque la source de rayonnement (10) du phare gauche (1l) est allumée, la source de rayonnement (10) du phare droit (1r) est éteinte et inversement,
**caractérisé en ce qu'**au moins deux caméras (3l, 3r) sont prévues, lesquelles sont synchronisées avec les temps d'allumage des phares (1l, 1r) de telle sorte que l'une (3r) des caméras (3l, 3r) s'allume lorsque la source de rayonnement (10) du phare gauche (1l) s'allume et s'éteint lorsque la source de rayonnement (10) du phare droit (1r) s'allume et l'autre (3l) parmi les caméras (3l, 3r) s'allume et inversement.

2. Procédé selon la revendication 1, **caractérisé en ce que,** pendant la capture d'une image par la caméra (3 ; 3l, 3r, 3h), parmi les sources de rayonnement (4l, 4r ; 10), au moins une source de rayonnement (4l, 4r ; 10) dont le spectre d'ondes électromagnétiques peut être détecté par l'au moins une caméra (3 ; 3l, 3r, 3h) est laissée allumée, et au moins une source de rayonnement (4l, 4r ; 10) dont le spectre d'ondes est le même que celui de la source de rayonnement (4l, 4r ; 10) laissée allumée est éteinte.

3. Procédé selon la revendication 1 ou 2, **caractérisé en ce que,** vue dans le sens de la marche avant (F), une caméra (3r) est disposée à droite et une autre caméra (3l) est disposée à gauche, dans lequel la caméra disposée à droite (3r) est alors allumée lorsque la source de rayonnement (10) du phare gauche (1l) est allumée et que la source de rayonnement (10) du phare droit (1r) est éteinte, et dans lequel la caméra disposée à gauche (3l) est allumée lorsque la source de rayonnement (10) du phare droit (1r) est allumée et que la source de rayonnement (10) du phare gauche (1l) est éteinte.

4. Procédé selon l'une des revendications précédentes, **caractérisé en ce que** les sources de rayonnement (10) font partie de phares (1l, 1r) et/ou de feux arrière (2l, 2r) du véhicule automobile (K) et sont commandées par l'intermédiaire d'une modulation de largeur d'impulsion (PWM1l, PWM1r), dans lequel la capture d'images par l'au moins une caméra (3l, 3r) n'est effectuée que si, dans un cycle (Z) de la modulation de largeur d'impulsion (PWM1l, PWM1r), un signal d'allumage (PWM+) pour une source de rayonnement (4r, 4l ; 10) est présent.

5. Procédé selon l'une des revendications précédentes, **caractérisé en ce que** les sources de rayonnement (4r, 4l) et l'au moins une caméra (3l, 3r) fonctionnent dans le spectre d'ondes infrarouges du rayonnement électromagnétique (ES).

6. Procédé selon l'une des revendications précédentes,
**caractérisé en ce qu'**un algorithme de reconnaissance d'objet est prévu, lequel évalue quelle source de rayonnement (4l, 4r ; 10) était allumée au moment d'une capture par une caméra (3l, 3r ; 3h, 3) et quelle position relative la source de rayonnement (4l, 4r ; 10) présente par rapport à la caméra (3l, 3r, 3h, 3).

7. Procédé selon l'une des revendications précédentes, **caractérisé en ce que** les sources de rayonnement (10) font partie de phares (1l, 1r) et une capture par l'au moins une caméra (3l, 3r) est effectuée alternativement dans les cas où seulement au moins une source de rayonnement (10) du phare gauche (1l), seulement au moins une source de rayonnement (10) du phare droit (1r) et des sources de rayonnement (10) des deux phares (1l, 1r) sont allumées.

8. Procédé selon l'une des revendications précédentes, **caractérisé en ce que** les sources de rayonnement (10) font partie de feux arrière (2l, 2r) et une capture par l'au moins une caméra (3h) est effectuée alternativement dans les cas où seulement au moins une source de rayonnement (10) du feu arrière gauche (2l), seulement au moins une source de rayonnement (10) du feu arrière droit (2r) et des sources de rayonnement (10) des deux feux arrière (2l, 2r) sont allumées.
